# EUROPEAN PATENT SPECIFICATION

(11) **EP 3 530 369 B1**
(45) Date of publication and mention of the grant of the patent: **28.07.2021**
(21) Application number: 18158880.7
(22) Date of filing: 27.02.2018
(51) Int. Cl.: B21J 15/14

(54) **DEVICE FOR JOINING ONE FIRST COMPONENT AND ONE SECOND COMPONENT WITH A WASHER**
VORRICHTUNG ZUM VERBINDEN EINES ERSTEN BAUTEILS UND EINES ZWEITEN BAUTEILS MIT EINER UNTERLEGSCHEIBE
DISPOSITIF POUR RELIER UN PREMIER ET UN SECOND COMPOSANT EN UTILISANT UNE RONDELLE

(43) Date of publication of application: 28.08.2019
(73) Proprietor: Newfrey LLC, New Britain, CT 06053 (US)
(72) Inventor: TRIPP, Andreas, 35394 Gießen (DE)
(74) Representative: SBD IPAdmin

(56) References cited:
- EP-A1- 0 197 909
- EP-A1- 2 671 662
- IT-B- 1 243 844
- US-A- 2 390 615
- US-A- 3 132 766

## Description

The present invention relates to a device, notably for joining at least one first component and one second component with an apparatus adapted to receive a washer. The present invention is more particularly directed to a device adapted to be implemented in joining methods of the type self-piercing riveting, commonly used, for example, in the automotive industry.

A major goal of the automotive manufacturers is to reduce the weight of passenger cars. The structural body of a vehicle is a vehicle's largest structure, and therefore ideal for weight reduction considerations to respond to environmental concerns. The implementation of assembly processes and/or materials minimizing the body weight of the vehicle is a key characteristic to achieve a reduced weight, without sacrificing vehicle dynamics, durability and crash worthiness.

More particularly, following an increasing need for high strength and weight reduction of a vehicle body, a steel sheet such as ultra-high tensile steel, a nonferrous metal plate such as aluminum or magnesium, and a plate made of a plastic material such as carbon fiber reinforced plastic (CFRP) or glass fiber reinforced plastic (GFRP) have been frequently used as a material of the vehicle body. The thickness of such sheets is also frequently changed.

It may be difficult to assemble such sheets together with conventional joining methods. A dissimilar material plastic composite plate and a metal plate may be joined by a very limitative joining mode, such as a bonding mode using an adhesive or a mechanical joining mode using engagement parts. Plate having low thicknesses are also difficult to assemble together with conventional joining methods.

The use of a mechanical joining mode such like self-piercing rivet is particularly interesting and commonly used in the automotive industry. However, this technology is limited by various factors such as the thickness of the sheets, the direction of the rivet and the ductility of the sheet facing the die used in the self-riveting process.

There is therefore a constant need to improve conventional joining methods like rivet joining technology using a self-piercing rivet and conventional joining devices.

Document IT1243844B (basis for the preamble of claim 1) discloses a riveted joint with a washer realized without pre holes and a method in which the washer is fed to the head of a riveting device. Document US2013000101 is directed to a connection between two components, at least one of them comprising a reinforced plastic, and a self-piercing connection element passing through the two components and a disc-shaped counter bearing, wherein the shaft of the rivet is fastened to the disc-shaped counter bearing so that first and second components are fastened between the head of the rivet and the counter bearing.

The use of a disc-shaped counter bearing (also called washer) allows the connection of components having a strength of more than 300MPa. For producing the connection, the self-piercing connection element, with head and shaft, is inserted into the first and second component. In order to reliably connect the two components together, the shaft of the connection element, which completely penetrates through the components to be connected, is anchored to the disc-shaped counter bearing. The disc-shaped counter bearing or washer is thus used as an auxiliary joining part.

Due to this construction, the components arranged between the head of the connection element and the disc-shaped counter bearing are held in a force-locking and form-locking manner. The disc-shaped counter bearing also ensures that the tensile stresses acting in the axial direction of the shaft are distributed over the surface of the counter bearing, and are then introduced into the adjacent second component. This reduces stress concentrations adjacent to the shaft of the connection element.

However, the use of such disc-shaped counter-bearing implies a complicated implementation, with the need to provide for each connection the washer (or disc-shaped counter bearing) and to provide a method which can be easily repeated.

It is hence an object of the present invention to at least alleviate the aforementioned shortcomings.

More particularly, it is an object of the invention to provide a device which allows an automatic feeding of a washer into the device before a joining operation step, in order to reduce the manufacturing time and to improve the repeatability of the process.

Accordingly the present invention provides a device for connecting a first and a second component comprising a C-shaped counterforce structure, an apparatus for supporting a workpiece on one arm of the counterforce structure, a mechanism supported on the other arm of the counterforce structure for performing a self-piercing riveting operation on the workpiece, and wherein the device further comprises a supply unit for feeding a washer into the apparatus for performing the operation on the workpiece. The supply unit comprises an intermediate buffer connected to the counterforce structure and adapted to receive a plurality of washers, a channel adapted to guide the washer from the intermediate buffer to the apparatus, and a separation element adapted to move one washer from the plurality of washers in the intermediate buffer into the channel.

Such device allows to automatically feed the washer into the apparatus, decreasing the manufacturing time and allowing the feeding operation to be timely reproduced for example during one operation cycle. Indeed, the intermediate buffer connected to the counterforce structure allows said structure to move independently during the entire connection cycle.

According to an embodiment, the device further comprises an actuator adapted to move the channel from a rest position, in which the operation on the workpiece can be performed to a feed position, in which the channel is adapted to transfer the coin to the apparatus. The motion of the channel allows to clear the space in the vicinity of the apparatus, avoiding any disturbance during the operation on the workpiece.

According to an embodiment, the intermediate buffer comprises a longitudinal opening extending along a longitudinal axis X between an inlet and an outlet, wherein the outlet is connected to an end of the channel. Thus there is a direct connection between outlet and channel, limiting the risks of miscarriage. The washers can be arranged in a stack, limiting the necessary storage space.

According to an embodiment, a latch extends in the longitudinal opening, the latch being adapted to apply an elastic force on the plurality of washers. Thus, a biasing force applied on the top of the stack of washer enabling the washers to stay in position and avoiding any free movement of the washers.

In an additional embodiment, the latch cooperates with a spring and is movable along the longitudinal axis.

In a further embodiment, the latch is movable between an active position, in which the latch extends at least partly in the longitudinal opening, and an inactive position, in which the longitudinal opening is adapted to be filled by a plurality of washers.

According to an embodiment, the separation element is a slide and is movable in translation between a rest position, in which the separation element extends outside from the longitudinal opening and an operating position, in which the separation element extends at least partly in the longitudinal opening. The slide is easy to actuate and to control.

According to an embodiment, the channel comprises a first end connected to the outlet of the intermediate buffer and a second end connectable to the apparatus.

According to an embodiment, the second end comprises a centering element adapted to center the channel with the apparatus. The centering element allows to connect the channel to the apparatus in a right position directly without need of further centering operations.

According to an embodiment, the second end further comprises a supporting element adapted to cooperate with the apparatus. This allows the channel to be supported by the apparatus, avoiding any risk of weak connection.

According to an embodiment, the channel and/or the intermediate buffer are moved by the actuator, which forms a first actuator, in a first direction and by a second actuator in a second direction, the first direction being different from the second direction. The two actuators provide a precise positioning of the channel in the feed position.

According to an embodiment, the channel and/or the intermediate buffer is supported by a first and a second lever, the first and/or the second lever being connected to the actuator to move the channel from the rest position to the operating position. In other words a linkage mechanism with at least two rods is provided.

In an additional embodiment, the first lever is connected to the one arm of the counterforce structure in the vicinity of the apparatus, and wherein the second lever is arranged in the vicinity of the intermediate buffer. This ensure a stable cinematic.

According to an embodiment, the device further comprises a magazine adapted to be removably connected to the intermediate buffer through connecting elements, wherein the magazine comprises a sliding element extending into a longitudinal opening adapted to receive a plurality of washer destined to be transferred into the intermediate buffer. Thus, the washer can be stored in the magazine before loading the intermediate buffer.

According to an embodiment, the magazine comprises a spring adapted to elastically force the washers in one position.

Other characteristics and advantages of the invention will readily appear from the following description of embodiments, provided as non-limitative examples, in reference to the accompanying drawings.

In the drawings:
Fig. 1 shows a side view of a device for joining a first and a second component with an apparatus and a supply unit for feeding a washer into the apparatus according to a first embodiment of the invention, wherein a channel of the supply unit is in a feed position;
Fig. 2 shows the device of Fig. 1 with the channel in a rest position;
Fig. 3 is a perspective view of the device of fig. 2 with the channel in a rest position;
Fig. 4 is a side view of a device for joining a first and a second component with an apparatus and a supply unit for feeding a washer into the apparatus according to a second embodiment of the invention, wherein a channel of the supply unit for feeding a washer is in a rest position;
Fig. 5 is a side view of the device of Fig. 4 with the channel in a feed position;
Fig. 6 is a perspective view of the supply unit of Fig. 5 with the channel in the feed position;
Fig. 7 is a perspective view of the supply unit of Fig. 4 in a rest position.

On the different figures, the same reference signs designate identical or similar elements.

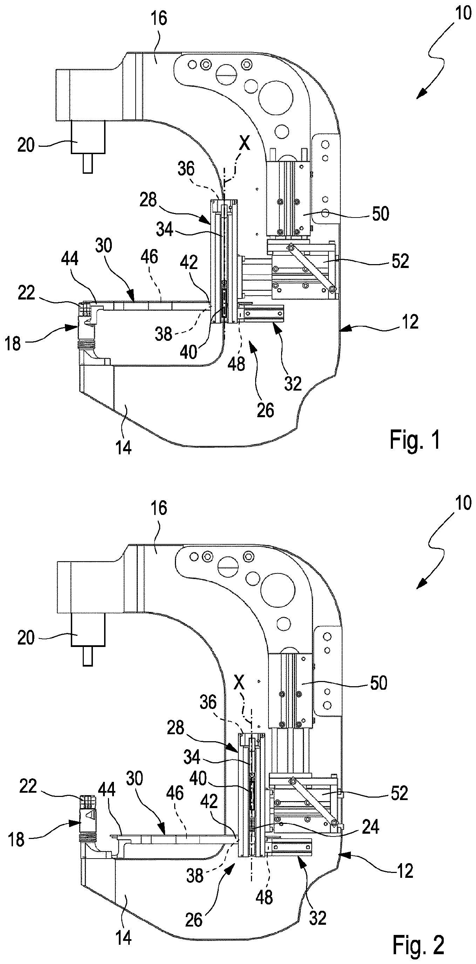

Fig. 1 shows a device 10 for joining a first and a second component. The device comprises a C-shaped counterforce structure 12. The C-shaped counterforce structure, also called C-frame, comprises a first arm 14 and a second arm 16. An apparatus 18 is arranged on one arm 14 of the counterforce structure. A mechanism 20 is supported on the other arm 16 of the counter force structure 12 for performing an operation on the workpiece. The operation which can be performed on the workpiece is self-piercing riveting.

The apparatus 18 is adapted to support a workpiece. For example the apparatus 18 comprises a die, a supporting body and a sleeve 22 arranged around a portion of the supporting body and around a head of the die. The sleeve 22 extends beyond the die head such that a recess is provided, the recess being adapted to receive a washer 24.

The apparatus 18 cooperates with a supply unit 26 for feeding a washer 24 into the apparatus 18 for performing the operation on the workpiece.

The supply unit 26, as illustrated on the figures comprises an intermediate buffer 28, a channel 30 and a separation element 32.

The intermediate buffer 28 is connected to the counterforce structure 12 and is adapted to receive a plurality of washers 24. The intermediate buffer 28 comprises a longitudinal opening 34 extending along a longitudinal axis X with an inlet 36 and an outlet 38. The longitudinal opening 34 comprises for example a circular or square or rectangular cross-section adapted to receive the plurality of washers. The dimensions of the cross-section sensibly corresponds to the dimension of the washers 24.

The washers 24 having the form of a coin with a circular section can be stacked in the longitudinal opening 34. The washer 26 may be a metal washer. The washer 24 has a circular shape. More particularly, the washer is a disc-shaped washer 24 with a top face, a bottom face and an edge connecting the top face to the bottom face. The washers 24 are received on their "flat" side (top face or bottom face).

The intermediate buffer 28 is for example designed to receive a stack of 35 washers 24. However, in other embodiments less or more washers can be provided.

The washers 24 can be fed into the longitudinal opening 34 of the intermediate buffer 28 through a manual or an automatic feeding mechanism which urges a stack of washer 24 into the longitudinal opening 34, for example after a joining cycle. A magazine M can be provided to load a plurality of washers 24 into the intermediate buffer 28, and more particularly into the longitudinal opening 34. The magazine M is adapted to be connected to the intermediate buffer through connecting elements. For example the magazine M may comprise a sliding element extending into a recess of the magazine, the sliding element being able to be translated into the longitudinal opening 34 for filling the intermediate buffer with the washers. The connecting elements are adapted to be fixed in the vicinity of the inlet 36. The sliding element is adapted to be translated from the inlet to the outlet.

The intermediate buffer 28 further comprises a latch 40. The latch 40 extends in an active position in the longitudinal opening 34. The latch 40 is adapted to apply an elastic force on a first washer of a stack, such that the stack of washer is biased toward the outlet 38. The latch 40 can be moved in translation along the longitudinal axis X in a first direction and a second direction (the first and second directions can extend along the longitudinal axis X and be opposite direction). The latch is thus adapted to apply a constant force on the stack of washer 24, independently of how many washers 24 are currently stored in the longitudinal opening 34. More particularly the latch 40 is movable from a start position corresponding to a position in the vicinity of the inlet. The latch is arranged in the start position when the longitudinal opening is full with washers (in other words when the intermediate buffer or longitudinal opening is entirely filled with washers). Upon delivery of a washer from the intermediate buffer into the channel, the stack of washer decreases from the thickness of one washer and the latch is moved toward the outlet 38 at a distance corresponding to the washer's thickness.

The latch 40 can also be moved (for example the latch can rotate) from an active position (in which the latch extends into the longitudinal opening and is adapted to apply an elastic force on the first washer) in an inactive position, in which the latch 40 clear the longitudinal opening 34 and does not extend in the longitudinal opening anymore. In the inactive position, the longitudinal opening and more particularly the inlet is open and one or more washers can be filled into the longitudinal opening 34, for example from the magazine to the intermediate buffer. Once the washer have been filled, the latch is moved back in an active position, in which said latch applies a force on the stack of washers arranged in the longitudinal opening 34.

The outlet 38 is connected to a first end 42 of the channel 30, such that a washer 24 exiting the longitudinal opening 34 can be moved into the channel. Thus, the washers 24 are moved (and used) according to the principle first in first out. A mechanical connection is provided between the outlet and the first end 42 of the channel 30.

The channel 30 is adapted to guide the washer 24 from the intermediate buffer 28 to the apparatus 18.

Finally the separation element 32 is destined to move one washer from the plurality of washer provided in the intermediated buffer into the channel and more particularly to the first end of the channel.

The channel extends between the first end connected to the intermediate buffer 28 (and more particularly to the outlet 38 of the longitudinal opening 34) and a second end 44 connectable to the apparatus 18. The channel 30 extends for example sensibly along the arm 14 of the C-shaped counterforce structure supporting the apparatus 18. The channel may extend substantially perpendicularly to the longitudinal axis.

The channel 30 is, as represented, a channel which can be closed, such that dust cannot enter into the channel or open. The channel comprises a track 46 in which the washers 24 extend. The inner dimension of the track 46 allows one washer 24 to slide or to translate along the track 46 from the first end 42 to the second end 44. The track 46 is designed such that only curvatures and no acute angles are provided, in order to assure a transmission of the washer 24 in the channel 30 without obstruction. The track is adapted to receive the washers 24 one after the other such that the edge of one washer touches the edge of the washer directly after or directly before. The motion of one washer arranged in the channel is thus transferred to the other washer.

The separation element 32 comprises for example a slide 48 adapted to move into the outlet of the longitudinal opening 34 and to translate a washer 24 from the outlet 38 to the first end 42 of the channel. The washers are fed into the channel one after the other such that the channel is completely filled with washer. The slide 48 is for example moved by an actuator from a rest position to an operating position. In the operating position, the slide 48 extends in the opening such as to push a washer 24 from the stack into the channel 30. The slide can be moved from the operating position to the rest position by a springback.

The translation of a washer 24 at the first end of the channel, if the channel is filled with washers, will be transferred to the washer located at the second end of the channel. Thus, when the second end of the channel is connected to the apparatus, the washer can be pushed into the corresponding recess of the apparatus, and the next joining operation can be performed.

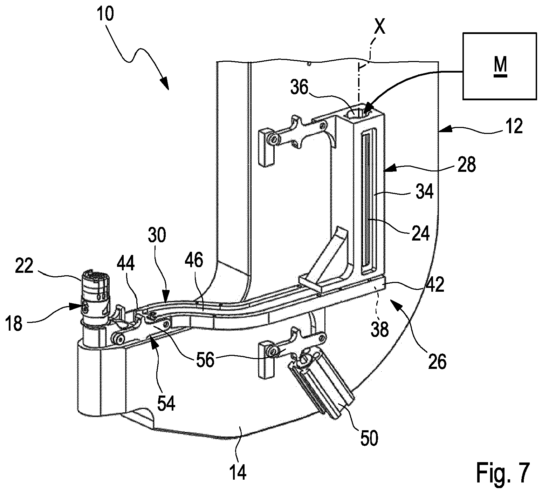

The channel 30 can be movable between a rest position (see for instance Fig. 2, Fig. 3, Fig. 4 and Fig. 7) and a feed position. In the rest position, the second end of the channel is at a non-zero distance from the apparatus 18 such that an operation on a workpiece can be performed without the channel 30 disturbing the joining process.

In the feed position, the second end 44 of the channel 30 can be connected to the apparatus such that a washer 24 can slide from the channel to the recess provided in the apparatus.

The channel can be securely connected to the intermediate buffer such that the intermediate buffer 28 can move with the channel 30 from the rest position to the feed position. However, in another embodiment, the intermediate buffer 28 can be removably connected to the channel 30, such that the channel 30 moves independently from the intermediate buffer 28 between the rest position and the feed position.

The channel and/or the intermediate buffer are movable between the rest position and the feed position with at least one actuator 50, 52. The actuator 50, 52 can be a pneumatic actuator or an electric actuator or a hydraulic actuator.

More particularly, according to a first embodiment depicted in Fig. 1, Fig. 2 and Fig. 3, the channel 30, the intermediate buffer 28 and the separation element 32 are moved from a rest position to a feeding position with two actuators 50, 52. A first actuator 50 moves the supply unit in a first direction (for example a direction parallel to the longitudinal axis X), whereas the second actuator 52 moves the supply unit in a second direction, the second direction being different from the first direction. The second direction being for instance sensibly perpendicular to the first direction.

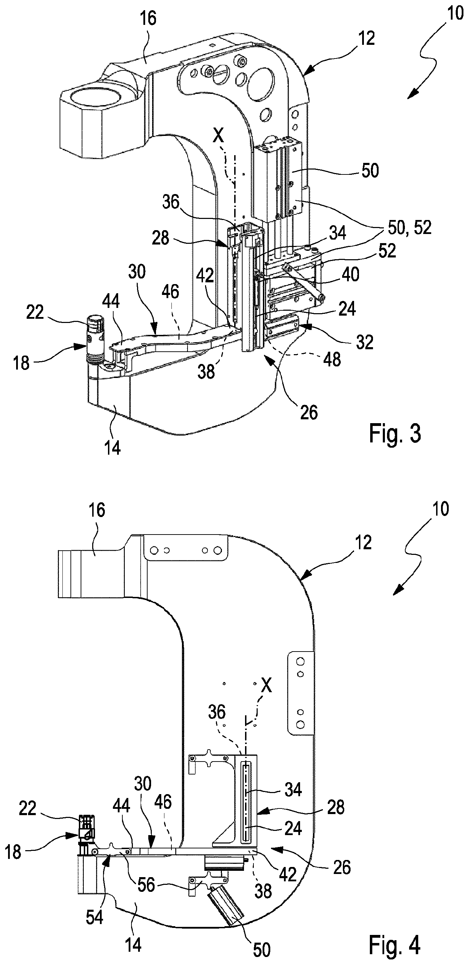

As shown in Fig. 3, the second end 44 of the channel 30 comprises a fork which is adapted to cooperate with the apparatus 18 in order to provide a centering of the second end for a smooth transition of a washer from the second end of the channel 30 to the apparatus 18.

In the rest position, the channel 30 or a holder of the channel can rest against the lower arm 14 of the C-shaped counterforce structure 12.

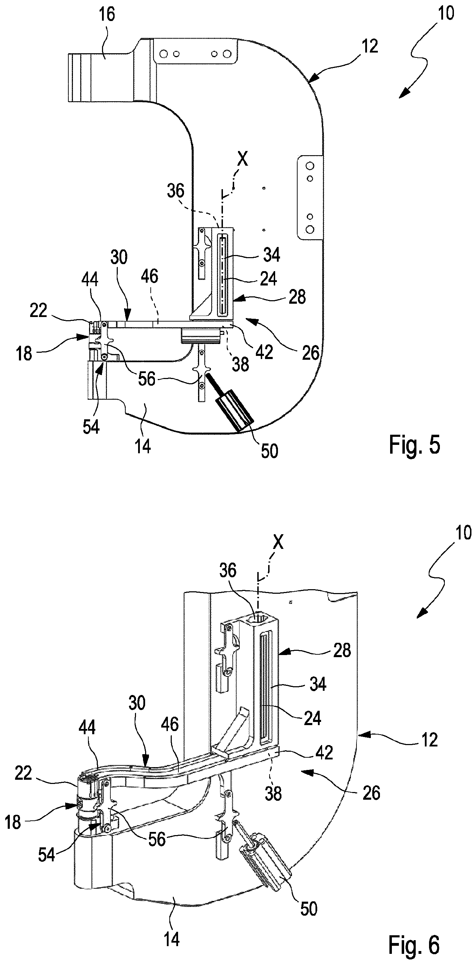

In a second embodiment shown in Fig. 5, fig. 6 and Fig. 7, a unique actuator is used to move the supply unit from the rest position to the feed position. A linkage system 54 is provided. For example the linkage system 54 comprises a plurality of rods or levers 56 each articulated on one end at the supply unit 26 and on the other end at the C-shaped counterforce structure and/or at the apparatus.

The presence of one unique actuator with a linkage system in the second embodiment enables to provide a robust cinematic and an exact positioning of the channel, limiting the risks of misalignment due to wear.

## Claims

1. Device (10) comprising:
- a C-shaped counterforce structure (12),
- an apparatus (18) for supporting a workpiece on one arm of the counterforce structure;
- a mechanism (20) supported on the other arm of the counterforce structure for performing a self-piercing riveting operation on the workpiece;
**characterized in that** the device further comprises:
- a supply unit (26) for feeding a washer (24) into the supporting apparatus (18), wherein the supply unit comprises:
- an intermediate buffer (28) connected to the counterforce structure and adapted to receive a plurality of washers,
- a channel (30) adapted to guide the washer (24) from the intermediate buffer (28) to the apparatus (18),
- a separation element (32) adapted to move one washer from the plurality of washers in the intermediate buffer into the channel.

2. Device (10) according to claim 1 further comprising an actuator (50, 52) adapted to move the channel (30) from a rest position in which the operation on the workpiece can be performed to a feed position in which the channel is adapted to transfer one washer to the apparatus.

3. Device (10) according to claim 1 or 2, wherein the intermediate buffer (28) comprises a longitudinal opening extending along a longitudinal axis (X) between an inlet and an outlet, wherein the outlet is connected to an end of the channel (30).

4. Device (10) according to claim 3, wherein a latch (40) extends in the longitudinal opening (34), the latch being adapted to apply an elastic force on the plurality of washers.

5. Device (10) according to claim 4, wherein the latch (40) cooperates with a spring and is movable along the longitudinal axis.

6. Device (10) according to claim 4 or 5, wherein the latch (40) is movable between an active position, in which the latch extends at least partly in the longitudinal opening, and an inactive position, in which the longitudinal opening is adapted to be filled by a plurality of washers.

7. Device (10) according to any of claims 3 to 6, wherein the separation element (32) is a slide (48) and is movable in translation between a rest position, in which the separation element extends outside from the longitudinal opening and an operating position, in which the separation element extends at least partly in the longitudinal opening.

8. Device (10) according to any of the preceding claims, wherein the channel (30) comprises a first end connected to an outlet of the intermediate buffer and a second end connectable to the apparatus (18), wherein the second end comprises a centering element adapted to center the channel with the apparatus.

9. Device (10) according to claim 8, wherein the second end further comprises a supporting element adapted to cooperate with the apparatus (18).

10. Device (10) according to any of the preceding claims, comprising a first and a second actuator, wherein the first actuator cooperates with the channel (30) and/or the intermediate buffer (28) to move the channel and/or the intermediate buffer in a first direction, and wherein the second actuator cooperates with the the channel and/or the intermediate buffer to move the channel and/or the intermediate buffer in a second direction, the first direction being different from the second direction.

11. Device (10) according to any of claims 1 to 9, wherein the channel and/or the intermediate buffer is supported by at least a first and a second lever, the first and/or the second lever being adapted to move the channel from the rest position to the operating position.

12. Device (10) according to claim 9, wherein the first lever comprises a first ends connected to the one arm of the counterforce structure (12) and a second end connected to the channel, and wherein the second lever is arranged in the vicinity of the intermediate buffer.

13. Device (10) according to any of the preceding claims, further comprising a magazine adapted to be connected to the intermediate buffer (28) for the filling of a plurality of washers into the intermediate buffer.

## Patentansprüche

1. Vorrichtung (10), die umfasst:
- eine C-förmige Gegenkraftstruktur (12),
- eine Einrichtung (18) zum Tragen eines Werkstücks auf einem Arm der Gegenkraftstruktur;
- einen Mechanismus (20), der von dem anderen Arm der Gegenkraftstruktur getragen wird, um einen selbstbohrenden Nietvorgang auf dem Werkstück auszuführen;
**dadurch gekennzeichnet, dass** die Vorrichtung weiter umfasst:
- eine Zuführeinheit (26) zum Zuführen einer Unterlegscheibe (24) in die Trageinrichtung (18), wobei die Zuführeinheit umfasst:
- ein Zwischenlager (28), das mit der Gegenkraftstruktur verbunden und dazu angepasst ist, eine Vielzahl von Unterlegscheiben aufzunehmen,
- einen Kanal (30), der angepasst ist, um die Unterlegscheibe (24) von dem Zwischenlager (28) zu der Einrichtung zu führen,
- ein Trennelement (32), das dazu angepasst ist, eine Unterlegscheibe von der Vielzahl von Unterlegscheiben in dem Zwischenlager in den Kanal zu bewegen.

2. Vorrichtung (10) nach Anspruch 1, die weiter einen Aktuator (50, 52) umfasst, der dazu angepasst ist, den Kanal (30) von einer Ruheposition, in der der Vorgang auf dem Werkstück ausgeführt werden kann, zu einer Zuführposition, in der der Kanal dazu angepasst ist, eine Unterlegscheibe zu der Einrichtung zu transferieren, zu bewegen.

3. Vorrichtung (10) nach Anspruch 1 oder 2, wobei das Zwischenlager (28) eine Längsöffnung umfasst, die sich entlang einer Längsachse (X) zwischen einem Einlass und einem Auslass erstreckt, wobei der Auslass mit einem Ende des Kanals (30) verbunden ist.

4. Vorrichtung (10) nach Anspruch 3, wobei sich eine Klinke (40) in die Längsöffnung (34) erstreckt, wobei die Klinke dazu angepasst ist, eine Federkraft auf die Vielzahl von Unterlegscheiben auszuüben.

5. Vorrichtung (10) nach Anspruch 4, wobei die Klinke (40) mit einer Feder zusammenwirkt und entlang der Längsachse bewegbar ist.

6. Vorrichtung (10) nach Anspruch 4 oder 5, wobei die Klinke (40) zwischen einer aktiven Position, in der sich die Klinke mindestens teilweise in die Längsöffnung erstreckt, und einer inaktiven Position, in der die Längsöffnung dazu angepasst ist, mit einer Vielzahl von Unterlegscheiben gefüllt zu werden, bewegbar ist.

7. Vorrichtung (10) nach einem der Ansprüche 3 bis 6, wobei das Trennelement (32) ein Gleitelement (48) ist und in Verschiebung zwischen einer Ruheposition, in der sich das Trennelement außerhalb der Längsöffnung erstreckt, und einer Betriebsposition, in der sich das Trennelement mindestens teilweise in die Längsöffnung erstreckt, bewegbar ist.

8. Vorrichtung (10) nach einem der vorstehenden Ansprüche, wobei der Kanal (30) ein erstes Ende umfasst, das mit einem Auslass des Zwischenlagers verbunden ist, und ein zweites Ende, das mit der Einrichtung (18) verbindbar ist, wobei das zweite Ende ein Zentrierelement umfasst, das dazu angepasst ist, den Kanal mit der Einrichtung zu zentrieren.

9. Vorrichtung (10) nach Anspruch 8, wobei das zweite Ende weiter ein Tragelement umfasst, das dazu angepasst ist, mit der Einrichtung (18) zusammenzuwirken.

10. Vorrichtung (10) nach einem der vorstehenden Ansprüche, die einen ersten und einen zweiten Aktuator umfasst, wobei der erste Aktuator mit dem Kanal (30) und/oder dem Zwischenlager (28) zusammenwirkt, um den Kanal und/oder das Zwischenlager in eine erste Richtung zu bewegen, und wobei der zweite Aktuator mit dem Kanal und/oder dem Zwischenlager zusammenwirkt, um den Kanal und/oder das Zwischenlager in eine zweite Richtung zu bewegen, wobei die erste Richtung von der zweiten Richtung unterschiedlich ist.

11. Vorrichtung (10) nach einem der Ansprüche 1 bis 9, wobei der Kanal und/oder das Zwischenlager von mindestens einem ersten und einem zweiten Hebel getragen wird, wobei der erste und/oder der zweite Hebel dazu angepasst ist/sind, den Kanal von der Ruheposition zu der Betriebsposition zu bewegen.

12. Vorrichtung (10) nach Anspruch 9, wobei der erste Hebel ein erstes Ende umfasst, das mit dem einen Arm der Gegenkraftstruktur (12) verbunden ist, und ein zweites Ende, das mit dem Kanal verbunden ist, und wobei der zweite Hebel in der Nähe des Zwischenlagers eingerichtet ist.

13. Vorrichtung (10) nach einem der vorstehenden Ansprüche, die weiter ein Magazin umfasst, das dazu angepasst ist, mit dem Zwischenlager (28) für das Füllen einer Vielzahl von Unterlegscheiben in das Zwischenlager verbunden zu sein.

## Revendications

1. Dispositif (10) comprenant :
- une structure de contre-force en forme de C (12),
- un appareil (18) pour supporter une pièce à usiner sur un bras de la structure de contre-force ;
- un mécanisme (20) supporté sur l'autre bras de la structure de contre-force pour effectuer une opération de rivetage autoperforant sur la pièce à usiner ;
**caractérisé en ce que** le dispositif comprend en outre :
- une unité d'alimentation (26) pour alimenter une rondelle (24) dans l'appareil de support (18), dans lequel l'unité d'alimentation comprend :
- un tampon intermédiaire (28) relié à la structure de contre-force et adapté pour recevoir une pluralité de rondelles,
- un canal (30) adapté pour guider la rondelle (24) depuis le tampon intermédiaire (28) jusqu'à l'appareil (18),
- un élément de séparation (32) adapté pour déplacer une rondelle depuis la pluralité de rondelles du tampon intermédiaire dans le canal.

2. Dispositif (10) selon la revendication 1 comprenant en outre un actionneur (50, 52) adapté pour déplacer le canal (30) d'une position de repos dans laquelle l'opération sur la pièce à usiner peut être effectuée à une position d'alimentation dans laquelle le canal est adapté pour transférer une rondelle vers l'appareil.

3. Dispositif (10) selon la revendication 1 ou 2, dans lequel le tampon intermédiaire (28) comprend une ouverture longitudinale s'étendant le long d'un axe longitudinal (X) entre une entrée et une sortie, dans lequel la sortie est reliée à une extrémité du canal (30).

4. Dispositif (10) selon la revendication 3, dans lequel un verrou (40) s'étend dans l'ouverture longitudinale (34), le verrou étant adapté pour appliquer une force élastique sur la pluralité de rondelles.

5. Dispositif (10) selon la revendication 4, dans lequel le verrou (40) coopère avec un ressort et est mobile le long de l'axe longitudinal.

6. Dispositif (10) selon la revendication 4 ou 5, dans lequel le verrou (40) est mobile entre une position active, dans laquelle le verrou s'étend au moins partiellement dans l'ouverture longitudinale, et une position inactive, dans laquelle l'ouverture longitudinale est adaptée pour être remplie par une pluralité de rondelles.

7. Dispositif (10) selon l'une quelconque des revendications 3 à 6, dans lequel l'élément de séparation (32) est un curseur (48) et est mobile en translation entre une position de repos, dans laquelle l'élément de séparation s'étend à l'extérieur de l'ouverture longitudinale et une position de fonctionnement, dans laquelle l'élément de séparation s'étend au moins partiellement dans l'ouverture longitudinale.

8. Dispositif (10) selon l'une quelconque des revendications précédentes, dans lequel le canal (30) comprend une première extrémité reliée à une sortie du tampon intermédiaire et une seconde extrémité pouvant être connectée à l'appareil (18), dans lequel la seconde extrémité comprend un élément de centrage adapté pour centrer le canal avec l'appareil.

9. Dispositif (10) selon la revendication 8, dans lequel la seconde extrémité comprend en outre un élément de support adapté pour coopérer avec l'appareil (18).

10. Dispositif (10) selon l'une quelconque des revendications précédentes, comprenant un premier et un second actionneur, dans lequel le premier actionneur coopère avec le canal (30) et/ou le tampon intermédiaire (28) pour déplacer le canal et/ou le tampon intermédiaire dans une première direction, et dans lequel le second actionneur coopère avec le canal et/ou le tampon intermédiaire pour déplacer le canal et/ou le tampon intermédiaire dans une seconde direction, la première direction étant différente de la seconde direction.

11. Dispositif (10) selon l'une quelconque des revendications 1 à 9, dans lequel le canal et/ou le tampon intermédiaire est supporté par au moins un premier et un second levier, le premier et/ou le second levier étant adaptés pour déplacer le canal de la position de repos à la position de fonctionnement.

12. Dispositif (10) selon la revendication 9, dans lequel le premier levier comprend une première extrémité reliée au premier bras de la structure de contre-force (12) et une seconde extrémité reliée au canal, et dans lequel le second levier est disposé à proximité du tampon intermédiaire.

13. Dispositif (10) selon l'une quelconque des revendications précédentes, comprenant en outre un magasin adapté pour être relié au tampon intermédiaire (28) pour le remplissage d'une pluralité de rondelles dans le tampon intermédiaire.
